(19) Europäisches Patentamt
European Patent Office
Office européen des brevets

(11) **EP 3 373 736 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **16794637.5**

(22) Anmeldetag: **11.11.2016**

(51) Internationale Patentklassifikation (IPC):
*A21D 8/02* (2006.01)    *A21D 13/00* (2017.01)
*A23L 7/178* (2016.01)    *A23P 30/20* (2016.01)
*A23P 30/34* (2016.01)    *A21C 1/00* (2006.01)
*A21C 11/20* (2006.01)    *A21D 13/06* (2017.01)

(52) Gemeinsame Patentklassifikation (CPC):
**A21D 8/025; A21C 1/006; A21C 1/065; A21C 1/10; A21C 11/20; A21C 14/00; A21D 13/066; A21D 13/50; A23L 7/17; A23L 7/178; A23P 30/20; A23P 30/34**

(86) Internationale Anmeldenummer:
**PCT/EP2016/077462**

(87) Internationale Veröffentlichungsnummer:
**WO 2017/081271 (18.05.2017 Gazette 2017/20)**

(54) **VORRICHTUNG UND VERFAHREN ZUR HERSTELLUNG EINES AUFGESCHÄUMTEN, TEIGBASIERTEN, GLUTENFREIEN LEBENSMITTELS UND VERWENDUNG DER VORRICHTUNG**

DEVICE AND METHOD FOR PRODUCING A FOAMED, DOUGH-BASED, GLUTEN-FREE FOOD PRODUCT AND USE OF THE DEVICE

APPAREIL ET PROCEDE DE PREPARATION D'UN PRODUIT ALIMENTAIRE MOUSSEUX A BASE DE PATE, SANS GLUTEN, ET UTILISATION DE L'APPAREIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2015 DE 102015119543**
              **23.06.2016 DE 102016111518**

(43) Veröffentlichungstag der Anmeldung:
**19.09.2018 Patentblatt 2018/38**

(73) Patentinhaber:
• **Eidgenössische Technische Hochschule Zürich**
   **8092 Zürich (CH)**
• **Roland Murten AG**
   **3280 Murten (CH)**

(72) Erfinder:
• **LAMMERS, Volker**
   **8008 Zürich (CH)**
• **WINDHAB, Erich**
   **8261 Hemishofen (CH)**

(74) Vertreter: **Keller Schneider Patent- und Markenanwälte AG Eigerstrasse 2 Postfach 3000 Bern 14 (CH)**

(56) Entgegenhaltungen:
**WO-A2-2015/180706**     **US-A- 5 549 922**
**US-B1- 6 207 214**

• **RENATA ROZYLO ET AL: "Abstract", INTERNATIONAL AGROPHYSICS, vol. 29, no. 3, 1 July 2015 (2015-07-01), pages 353 - 364, XP055505813, DOI: 10.1515/intag-2015-0042**
• **SARAH JANE PARKER: "Yeast Free Gluten Free Sandwich Bread", 11 November 2012 (2012-11-11), Retrieved from the Internet <URL:https://thefitcookie.com/yeast-free-sandwich-bread/> [retrieved on 20220805]**

- **A.H. MASSEY ET AL: "Air Inclusion Into a Model Cake Batter Using a Pressure Whisk: Development of Gas Hold-up and Bubble Size Distribution", JOURNAL OF FOOD SCIENCE, vol. 66, no. 8, 28 October 2001 (2001-10-28), US, pages 1152 - 1157, XP055326640, ISSN: 0022-1147, DOI: 10.1111/j.1365-2621.2001.tb16097.x**
- **DANA ELGETI ET AL: "Strategies for the aeration of gluten-free bread - A review", TRENDS IN FOOD SCIENCE AND TECHNOLOGY, vol. 46, no. 1, 1 November 2015 (2015-11-01), GB, pages 75 - 84, XP055326605, ISSN: 0924-2244, DOI: 10.1016/j.tifs.2015.07.010**

**Beschreibung**

**Technisches Gebiet**

Die vorliegende Erfindung betrifft ein Verfahren und eine Vorrichtung zur Erzeugung aufgeschäumter, teigbasierter, glutenfreier Lebensmittelprodukte, insbesondere Frischbackwaren und Dauerbackwaren.

**Stand der Technik**

Traditionell wird die Herstellung von Backwaren in die Verarbeitungsschritte Teigbereitung, Teiglockerung und Backen eingeteilt.

Bei der Herstellung von Frischbackwaren auf Basis glutenbeinhaltender Getreideerzeugnisse (Weizen, Roggen) treten bekanntermassen während des Knetvorgangs die Teigkomponenten Mehl, Wasser, Hefe bzw. Mikroorganismen und Salz in Wechselwirkung miteinander und bilden das dreidimensionale Glutennetzwerk aus. Die Lockerung der Teige erfolgt meist biologisch-biochemisch durch hefeinduzierte Gasbildung und gibt dem Teig die gewünschte Flüssigkeit-Gas-Feststoff-Struktur. Die Gashalteeigenschaften des Teigs sind auf das Glutennetzwerk zurückzuführen und verleihen dem Gebäck die charakteristische Krumenstruktur und einen schmackhaften sensorischen Gesamteindruck. Beim Backen erfolgt eine thermische Zustandsänderung der Inhaltsstoffe und eine Umwandlung des Teigs zu einem Gebäck aus Krume und Kruste.

Das optimale Volumen von Gebäcken ist abhängig von Gleichgewichtsbedingungen zwischen Gasbildungsintensität und Gashaltevermögen.

Da bei glutenfreien Backwaren das sogenannte Klebernetzwerk fehlt, ist auch das Vermögen dieser Teige gebildetes Gas zu halten deutlich verringert. Während der Fermentation geht gebildetes Gas verloren und/ oder führt zu einer Vergröberung der Blasenstruktur beziehungsweise Porung durch Koaleszenz. Für das fertige Gebäck resultieren daraus nachteilige Qualitätsmerkmale wie ein reduziertes Backvolumen, eine dichte und feste Struktur, sowie ein unappetitliches Erscheinungsbild. Die Schwierigkeit bei der Entwicklung glutenfreier Backwaren besteht zusammenfassend darin, ein hohes Gebäckvolumen in Kombination mit einer soften Textur und einer feinen Porenstruktur zu erzeugen.

Bisherige bekannte Strategien zur Optimierung von glutenfreien Backwaren konzentrieren sich auf formulierungstechnologische Massnahmen einen möglichst gleichwertigen Proteinersatz zu finden. Rezepturen zur Herstellung glutenfreier Backwaren basieren oftmals auf Stärke enthaltenden Rohstoffen wie Reismehl und verschiedenen Stärkearten. Aufgrund der verminderten Backfähigkeit dieser Komponenten ist häufig noch ein erhöhter Einsatz von Emulgatoren, Hydrokolloiden und anderen Zusatzstoffen notwendig. Die Forschungsanstrengungen haben zu Textur- und Strukturverbesserungen geführt, ohne aber die Funktionalität des Glutens vollständig kompensieren zu können. Der Erfolg rein rezeptorientierender Verbesserungsmassnahmen ist aufgrund der fundamental unterschiedlichen Materialeigenschaften von glutenbeinhaltenden und glutenfreien Teigen limitiert. Aus dieser Sicht ist auch das Festhalten an den traditionellen Verarbeitungsschritten, insbesondere der Teiglockerung nicht sinnvoll.

Neben der klassischen Hefelockerung sind im Bereich der Frischbackwaren auch Lockerungen mit Sauerteig oder Backtriebmitteln weit verbreitet. Bei Blätterteiggebäcken hingegen spricht man von einer physikalischen Lockerung, da die gelockerte Porenstruktur durch verdampfendes Wasser während des Backvorgangs entsteht.

Als weitere Methode zur Lockerung von Backwaren sei das direkte Einschlagen bzw. Einarbeiten von Gasen in teigartige Massen genannt. Dieses Verfahren findet mehrheitlich Anwendung bei niedrigviskosen Teig- bzw. Biskuitmassen auf Basis einer Mischung aus Eischnee, Eigelb, Zucker und Mehl, wobei die Mehlkomponenten eine untergeordnete Rolle spielen. Für die Herstellung von Frischbackwaren ist diese Methode aufgrund der höheren Teigviskosität nicht geeignet.

Über die genannten traditionellen Lockerungsarten hinaus lassen sich in der Patent- und wissenschaftlichen Literatur weitere Methoden zur Lockerung von Teigen finden. Diese sind allerdings ebenfalls mehrheitlich auf glutenbeinhaltende Teigsysteme ausgelegt und setzen demnach eine erhöhte Gashaltefähigkeit voraus.

Erste Bestrebungen Teige aufzuschäumen basierten auf der Idee, lange Fermentationszeiten zu vermeiden, um so den Herstellungsprozess effizienter zu gestalten. Durch direktes Einarbeiten von Gas in den Teig sollte die langandauernde Gasbildung durch Hefe überflüssig werden. Bereits 1865 wurde ein Patent (US 48,534) erteilt, das die Teigherstellung in einem geschlossenen Knetkessel vorsieht, in dem Kohlensäure oder ein anderes Gas unter hohem Druck in einen Teig eingearbeitet wird. Mit anderen Worten wird das in diesem bekannten Herstellungsprozess verwendete Gas in den Teig dispergiert beziehungsweise möglichst fein verteilt. Eine nachgeschaltete Entspannung sorgt für eine Ausdehnung der Gase und eine Volumenvergrösserung des Teigs. Die Entspannung lässt sich jedoch anhand dieses bekannten Herstellungsprozesses nur schwer kontrollieren beziehungsweise steuern, was gerade bei Teigen mit niedriger Gashaltefähigkeit nachteilig ist.

Der Grundgedanke, Teige unter Druck oder Vakuum zu kneten, wurde weitergeführt, da vorteilhaft neben dem Volumen auch die Grösse und Verteilung der Gasblasen und somit die spätere Porenstruktur im Gebäck beeinflusst wird.

Eine gezielte Steuerung der Gasblasenverteilung im Teig und der Krumenstruktur wurde 1961 in England durch eine neue Kneterentwicklung forciert. Im sogenannten Chorleywood-Verfahren werden die Teigkomponenten unter einem partiellen Vakuum in einem Kneter miteinander vermischt. Damit kann die Struktur hin zu einer feineren Porung im Gebäck gezielt beeinflusst werden.

Im Bereich der kontinuierlichen Prozesse sind Erfindungen basierend auf Extrusionstechnologie bekannt. In Patent US 5,417,992 (Rizvi) wird ein Extrusionsverfahren beschrieben, bei dem überkritisches Kohlenstoffdioxid ($CO_2$) in eine Teigmatrix eingemischt beziehungsweise injiziert wird, worauf das verwendete Kohlenstoffdioxid ($CO_2$) unter Druck im wässrigen Anteil der Teigmatrix gelöst vorliegt. Für den überkritischen Zustand von Kohlenstoffdioxid ($CO_2$) sind Drücke >73.75 bar und Temperaturen > 30.98 °C notwendig.

Aus US 5,120,559 (Rizvi) ist ebenfalls ein Extrusionsverfahren bekannt, bei welchem Kohlenstoffdioxid ($CO_2$) als überkritisches Fluid unter Druck in eine sich im Extruder befindende glutenbeinhaltende Teigmatrix injiziert wird.

Bei überkritischen Fluiden verschwindet die Phasengrenze zwischen flüssigem und gasförmigem Zustand. Das Fluid nimmt die Dichte der Flüssigkeit und die Viskosität des Gases an. Diese Kombination sorgt für ein hohes Lösevermögen und ein vollständiges Verschwinden bei Druckminderung. Der Nachteil beim Einsatz eines überkritischen Fluids und den resultierenden extremen Prozessbedingungen liegt in der Wahl eines geeigneten, möglichst verschleissarmen Equipments und des dennoch hohen Wartungsaufwands.

US 5,549, 922 A zeigt ein Verfahren zur Verringerung einer Mikroorganismenpopulation in einem mehlhaltigen Teig, wobei der Teig für eine bestimmte Zeit und unter einem bestimmten Druck einem Inertgas ausgesetzt wird und der Gasdruck nach Ablauf der genannten Zeit abrupt verringert wird. Damit kann ein sterilisiertes Halbfabrikat erzeugt werden, das in einem Kühlschrank gelagert werden kann, bis es für die weitere Verarbeitung verwendet wird.

US 6,207,214 B1 zeigt ein Verfahren und eine Vorrichtung zur Herstellung von koreanischem traditionellem Ölgebäck in Massenproduktion, wobei der Teig unter Druck Kohlenstoffdioxid ausgesetzt wird.

Der Artikel "Air Inclusion Into a Model Cake Batter Using a Pressure Whisk: Development of Gas Hold-up and Bubble Size Distribution" von A.H. Massey et al., veröffentlicht in "Journal of Food Science", Bd. 66, Nr. 8, 28. Oktober 2001, Seiten 1152-1157, untersucht die Blasenbildung in Kuchenteig, insbesondere die Blasengrössenverteilung in Abhängigkeit der Belüftungs-Zeit.

Alle genannten Verfahren beziehen sich vornehmlich auf glutenbeinhaltende Teigsysteme. Es wird dabei vorausgesetzt, dass die Teige vergleichbare Materialeigenschaften wie glutenbeinhaltende Teige haben (rheologisches Verhalten, Festigkeit) und ein hohes Gashaltevermögen besitzen. Bisher ist somit nachteilig aus dem Stand der Technik keine explizite Anwendung bekannt, welche auch für teigbasierte Lebensmittelprodukt mit niedrigem Gashaltevermögen wie beispielsweise glutenfreie Teige eine wünschenswerte Porung gewährleisten.

Der Artikel "Physical properties of gluten-free bread caused by water addition" von Renata Rozylo et al., veröffentlicht in "International Agrophysics", Bd. 29, Nr. 3, 1. Juli 2015, Seiten 353-364, zeigt Änderungen der physikalischen Eigenschaften von verschiedenen Arten natürlicher glutenfreier Brote in Abhängigkeit der Wassermenge, mit der sie hergestellt wurden.

## Darstellung der Erfindung

Die Aufgabe der vorliegenden Erfindung ist es, ein aufgeschäumtes, teigbasiertes Lebensmittelprodukt basierend auf glutenfreien Pulverkomponenten und / oder Mehlkomponenten und Flüssigkeit, insbesondere Wasser, sowie eine Vorrichtung und ein Verfahren zur reproduzierbaren Herstellung des aufgeschäumten, teigbasierten Lebensmittelprodukts bereitzustellen, der die beschriebenen Nachteile von konventionell hergestelltem/ gelockertem Teig überwindet und geeignet ist für Backwaren, die unabhängig vom Gashaltevermögen hohen Anforderungen an Volumen, Aussehen und Struktur genügen und insbesondere bei der Herstellung geringere Anforderungen an das Equipment und die Wartung stellen.

Diese Aufgaben werden durch die erfindungsgemässen Gegenstände erfüllt, die in den angefügten Ansprüchen definiert sind.

Die vorliegende Erfindung betrifft ein Verfahren zur Herstellung eines aufgeschäumten, teigbasierten Lebensmittelprodukts, wobei die Schaumstruktur der Teige über einen neuartigen Aufschäumprozess hergestellt wird, der sich in Wesentlichen in die Schritte Gaslösung, Gasblasennukleation bzw. Gasblasenbildung / Schaumbildung und Schaumstabilisierung einteilen lässt.

Das erfindungsgemässe Verfahren umfasst die Verfahrensschritte gemäß Anspruch 1.

Erfindungsgemäss umfasst das Verfahren in Verfahrensschritt b) eine Voranreicherung der Teige bzw. ein Einbringen in den Teig sowie in Verfahrensschritt c) ein Lösen mit einem Gas im subkritischen Zustand unter dem kritischen Punkt und bei einem Druck von 10bar ≤ p < kritischer Druck des Gases. Es hat sich gezeigt, dass die Drücke zwischen Verfahrensschritt b) und c) im Wesentlichen konstant bleiben und nur in einem geringen Bereich von 5bar variieren können.

Besonders bevorzugt wird in Verfahrensschritt b) als Gas Kohlenstoffdioxid ($CO_2$) bei Drücken von 25 ≤ p ≤ 65bar und bei einer Temperatur von < 31 °C eingebracht. Es hat sich gezeigt, dass das in diesem bevorzugten, subkritischen Bereich unter dem kritischen Punkt eingebrachte Gas weiterhin eine wünschenswerte Löslichkeit in im wässrigen Anteil der aufzuschäumenden Lebensmittelproduktmatrix gewährleistet (da $CO_2$ üblicherweise in diesen Druck- und Temperaturbereichen in der flüssigen Phase vorliegt).

Alternativ zu Kohlenstoffdioxid ($CO_2$) wird in Verfahrensschritt b) als Gas Lachgas ($N_2O$) im subkritischen Zustand eingesetzt, wobei Lachgas ($N_2O$) bevorzugt bei Drücken von $10 \leq p < 72.4$ bar (d.h. < der kritische Druck von $N_2O$) und bei einer Temperatur von < 36.4 °C eingebracht wird.

Im Weiteren ist es alternativ oder zusätzlich denkbar, dass das Gas bereits gelöst in einer Dispersion unter subkritischen Bedingungen in Verfahrensschritt b) eingebracht wird.

Es wurde vorteilhaft gefunden, dass die erhöhte, wünschenswerte Löslichkeit der Gase unter Druck bei einer Druckminderung beziehungsweise Wiederentspannung zur Gasblasennukleation und Schaumbildung führt, wobei durch eine gezielte Wiederentspannung die Porenstruktur einstellbar ist.

Im Weiteren kann vorteilhaft ein vereinfachter und leichter zu wartendes Equipment zur Durchführung des erfindungsgemässen Verfahrens verwendet werden und zudem sind die Sicherheitsanforderungen geringer bei der erfindungsgemässen Verwendung eines Gases im subkritischen Bereich gegenüber der bekannten Verwendung eines überkritischen Gases.

Im Weiteren wird im Sinne der vorliegenden Erfindung unter einem Gas im subkritischen Zustand verstanden, dass einerseits das verwendete Gas unter dem für das verwendete Gas thermodynamisch kritischen Punkt liegt. Bekanntermassen wird der kritische Punkt ausgezeichnet durch eine der drei Zustandsgrössen: kritische Temperatur, kritischer Druck, kritische Dichte.

Das Gas wird im Verfahrensschritt c) im subkritischen Zustand in der Teigmatrix gemäss einer bevorzugten Weiterbildung der vorliegenden Erfindung bei einer definierten, geeigneten Kombination von Scherung, Temperatur, Verweilzeit und Druck, vorzugsweise für Kohlenstoffdioxid ($CO_2$) als verwendetes Gas bei Drücken von bevorzugt 10bar $\leq p < 73.8$bar (d.h. < der kritische Druck von $CO_2$), noch bevorzugter 25bar $\leq p \leq 65$bar und bei einer Temperatur von < 31 °C gelöst. Durch eine derartige Kombination wird sichergestellt, dass die vorgegebene Gasmenge innerhalb kürzester Zeit tatsächlich in einem gelösten und nicht in einem dispergierten Zustand vorliegt.

Alternativ zu Kohlenstoffdioxid ($CO_2$) kann in Verfahrensschritt c) als Gas Lachgas ($N_2O$) im subkritischen Zustand bei Drücken von bevorzugt 10bar $\leq p < 72,4$bar (d.h. < der kritische Druck von $N_2O$) und einer Temperatur < 36,4°C gelöst werden.

Im Weiteren wird in Verfahrensschritt c) vorzugsweise eine Verweilzeit von bevorzugt 30s bis 300s, noch bevorzugter 80s bis 200s, am meisten bevorzugt 100s bis 150s eingestellt.

Die vorgegebene Gasmenge (Masse) ist vorteilhaft derart gewählt, dass die Dichte bzw. der Lockerungsgrad des Schaums gezielt einstellbar ist. Vorzugsweise wird in Verfahrensschritt b) die eingesetzte Gasmenge auf 0.05 bis 1.5 Gew.% bezogen auf die aufzuschäumende Lebensmittelmatrix eingestellt.

Ein nachfolgend eingestellter Druckabfall im Verfahrensschritt d) vorzugsweise über eine Düse oder ein druckgesteuertes Ventil sorgt für eine Nukleation der Gasblasen, wobei ein schneller Druckabfall in Kombination mit einer hohen Scherung zu einer erhöhten Nukleationsrate führt. In Verfahrensschritt d) wird eine Druckabfallrate von >60bar/min eingestellt.

Da bei diesem Prozess keine langandauernde Fermentation notwendig ist, wird die Schaumdestabilisierung des in Verfahrensschritt d) erhaltenen, aufgeschäumten, teigbasierten Lebensmittelprodukts minimiert, indem in einem anschliessenden Verfahrensschritt e) der geschäumte Teig unmittelbar im Backofen verfestigt wird. So wird vorteilhaft ermöglicht, dass auch für aus niedrigviskosen Teigschäumen (anfälliger für Schaumdestabilisierung) erhaltene Gebäcke, beispielsweise Brot, eine feine Porung erzielt werden kann. Alternativ ist es denkbar, dass in Verfahrensschritt e) mittels Schockgefrieren eine Schaumstabilisierung des in Verfahrensschritt d) erhaltenen, aufgeschäumten, teigbasierten Lebensmittelprodukts erzielt wird.

Es hat sich gezeigt, dass das Gebäckvolumen derartiger glutenfreier Backwaren weitestgehend unabhängig von den Material- (Rheologie) und Gashalteeigenschaften (Gluten) des Teiges ist.

Mittels des erfindungsgemässen Verfahrens ist es möglich glutenfreie, microgeschäumte Teige herzustellen, die die Eigenschaften der fertigen Backware hinsichtlich Volumen, Textur und Porenstruktur positiv beeinflussen.

Ein weiterer Aspekt der vorliegenden Erfindung betrifft eine Vorrichtung gemäss Anspruch 5 zur Durchführung des erfindungsgemässen Verfahrens zur Herstellung eines aufgeschäumten, teigbasierten Lebensmittelprodukts.

Die erfindungsgemässe Vorrichtung umfasst zumindest eine zur Teigbereitung geeignete Einrichtung zur Herstellung einer aufzuschäumenden, teigbasierten Lebensmittelproduktmatrix sowie eine Zufuhreinrichtung zur Zufuhr eines Gases in die aufzuschäumende, teigbasierte Lebensmittelproduktmatrix.

Erfindungsgemäss ist die Vorrichtung derart ausgestaltet, dass Gas in einem subkritischen Zustand unter dem kritischen Punkt bei einem Druck von 10bar $\leq p <$ kritischer Druck des Gases in den wässrigen Anteil der aufzuschäumenden Lebensmittelmatrix mittels der Zufuhreinrichtung einbringbar ist und ein Lösen des eingebrachten Gases in einem subkritischen Zustand unter dem kritischen Punkt bei einem Druck von 10bar $\leq p <$ kritischer Druck des Gases in der Vorrichtung einstellbar ist zum Erhalt eines aufgeschäumten, teigbasierten Lebensmittelprodukts. Weitere vorteilhafte Ausgestaltungsformen sind in den abhängigen Patentansprüchen angegeben.

Vorzugsweise ist die zur Teigbereitung geeignete Einrichtung ein Extruder, insbesondere ein Doppelschneckenextruder. Alternativ zu einem Extruder kann die zur Teigbereitung geeignete Einrichtung ein Batch-Kneter sein.

Anhand eines Extruders als Einrichtung zur Teigbereitung zur Durchführung der Verfahrensschritte a) bis d) kann vorteilhaft ein kontinuierlicher Herstellungsprozess erzielt werden. Mit anderen Worten können anhand eines Extruders die Verfahrensschritte a) bis d) seriell durchgeführt werden.

Der Extruder umfasst mindestens eine derartig ausgestaltete Schneckenkonfiguration, welche nebst der üblichen Förderelemente zusätzliche, geeignete Knet- und Mischelemente umfasst. Durch derartige Knet- und Mischelemente wird vorteilhaft das zu lösende Gas in subkritischem Zustand besonders gut in die aufzuschäumende Lebensmittelproduktmatrix eingebracht und dabei das Lösen des Gases in Verfahrensschritt c) vorteilhaft verkürzt. Die Mischelemente sind derart ausgestaltet, dass ein distributives Mischen beim Lösen des Gases in der Lebensmittelproduktmatrix erzielt wird.

Die erfindungsgemässe Vorrichtung umfasst eine Düse oder ein Ventil, welche derart ausgestaltet sind, um eine Druckabfallrate von >60bar/min zu gewährleisten.

Im Sinne der vorliegenden Erfindung ist eine solche verwendete Düse endseitig des Extruders angeordnet und ist einerseits derart ausgestaltet und gewählt, um eine Druckregulierung im Extruder abhängig von der Teigviskosität und Teigdichte, sowie vom Massendurchsatz zu ermöglichen. Andererseits ist die Düse derart ausgestaltet, dass eine gezielte Entspannung und Gasblasenbildung erzielt wird. Eine erhöhte Scherung bei der Entspannung sorgt für eine erhöhte Bildung von Gasblasen. Eine hohe Blasenanzahl zu Beginn des Schäumens ist entscheidend für eine anschliessende, gleichmässige Porung im Gebäck.

Es wurde besonders vorteilhaft gefunden, das überkritische Bedingungen mit dem entsprechenden nachteiligen Wartungsaufwand aufgrund einer intensiven Durchmischung durch die Wahl geeigneter Mischelemente, kombiniert mit einer ausreichend langen Verweilzeit und einer gezielten Entspannung durch eine Düse oder ein Ventil anhand der erfindungsgemässen Vorrichtung vermieden werden kann.

Eine weitere, bevorzugten Ausführungsform der erfindungsgemässen Vorrichtung kann durch einen druckdichten Behälter als geeignete Einrichtung zur Teigbereitung vorgesehen sein, in dem die Pulver- und Flüssigkeitskomponenten zur Bildung einer aufzuschäumenden, teigbasierten Lebensmittelproduktmatrix im gewünschten Mischungsverhältnis gefüllt werden. Durch Schütteln bildet sich ein Teig und durch Zugabe von Gas eingebracht über Gaskartuschen im Sinne einer Zufuhreinrichtung vorzugsweise bei einem Druck in einem niedrigeren Bereich von 15bar ergibt sich in dem Behälter ein Teig-/Gasgemisch im Sinne einer aufzuschäumenden Lebensmittelproduktmatrix des herzustellenden Lebensmittelprodukts, wobei das Gas in einem subkritischen Zustand im wässrigen Teiganteil gelöst wird. Bei Austritt der aufzuschäumenden Lebensmittelproduktmatrix aus dem druckdichten Behälter wird aufgrund der Druckentspannung eine Gasblasenbildung induziert.

In einem für den Austritt der Lebensmittelmatrix bestimmten Austrittsbereich des druckdichten bzw. druckdicht verschliessbaren Druckbehälters ist eine Entspannungsdüse angeordnet zur Erzielung einer Druckentspannung und damit zur Bildung einer aufgeschäumten Lebensmittelproduktmatrix.

Typischerweise handelt es sich bei der weiteren, bevorzugten Ausführungsform um einen Rahmbläser, beispielsweise des Typs Kisag Bläser Gastro, und somit um eine nichtindustrielle Anwendung. Bei den verwendeten Gaskartuschen kann es sich beispielsweise um Kisag Kapseln gefüllt mit Kohlenstoffdioxid ($CO_2$) und / oder Lachgas ($N_2O$) handeln.

Es hat sich vorteilhaft gezeigt, dass diese weitere, bevorzugte Ausführungsform mit einem druckdichten bzw. druckdicht verschliessbaren Druckbehälter als zur Teigbereitung geeignete Einrichtung zur Teigbereitung insbesondere für niedrig viskose, glutenfreie Teige besonders geeignet ist. Im Weiteren kann diese weitere, bevorzugte Ausführungsform vorteilhaft nichtindustriell im Küchenmassstab angewandt werden.

Offenbart ist ein teigbasiertes Lebensmittelprodukt umfassend zumindest einen Gewichtsanteil eines Mehls mindestens eines Stärke enthaltenden Rohstoffs sowie einen Gewichtsanteil Wasser, hergestellt mittels des erfindungsgemässen Verfahrens und der erfindungsgemässen Vorrichtung.

Im Sinne der vorliegenden Erfindung wird unter einem teigbasierten Lebensmittelprodukt eine Zusammensetzung verstanden, welche zumindest ein Mehl aus mindestens einem Stärke enthaltenden Rohstoff, Wasser umfasst. Das erfindungsgemäss hergestellte teigbasierte Lebensmittelprodukt kann im Weiteren Glukose, Guar, Salz, Zucker, Carboxymethylcellulose etc. umfassen.

Es wurde überraschend gefunden, dass das erfindungsgemäss hergestellte teigbasierte Lebensmittelprodukt gegenüber den mittels den bekannten Herstellungsverfahren erhaltenen Teigprodukten unerwartet eine besonders feine Porung aufweist. Zudem wurde vorteilhaft gefunden, dass bei dem erfindungsgemäss aufgeschäumten Lebensmittelprodukt die Erzielung eines erwünschten Volumens und Porung weitestgehend unabhängig von den Gashalteeigenschaften und Materialeigenschaften wie der Viskosität des Teiges ist.

Mit anderen Worten kann bei dem erfindungsgemäss aufgeschäumten Lebensmittelprodukt vorteilhaft erreicht werden, dass insbesondere auch bei glutenfreien, teigbasierten Lebensmittelprodukten mit verringerten Gashalteeigenschaften ein erwünschtes Volumen und eine erwünschte Porung erreicht werden kann.

Im Weiteren wurde gefunden, dass das erfindungsgemäss hergestellte Lebensmittelprodukt sowohl für Dauerbackwaren wie beispielsweise Snackprodukte aus üblicherweise hochviskosen Teigen wie auch für Frischbackwaren wie beispielsweise Brot aus üblicherweise niedrigviskosen Teigen geeignet ist.

Es wurde vorteilhaft eine prozesstechnologische Kompensation der Glutenfunktionalität zur Herstellung von glutenfreien Backwaren, die in Volumen, Textur und Porenstruktur vergleichbar zu glutenbeinhaltenden Backwaren gefunden.

Üblicherweise müssen wie eingehend erläutert bei glutenfreien, teigbasierten Lebensmittelprodukten Zusatzstoffe wie z.B. Hydrokolloide und Emulgatoren zugegeben werden, um die resultierenden, verringerten Gashalteeigenschaften zu kompensieren. Da Volumen und Porung des erfindungsgemäss hergestellten Lebensmittelprodukts weitestgehend unabhängig von den Gashalteeigenschaften sind, kann im Weiteren vorteilhaft eine Reduzierung von solchen Zusatzstoffen erreicht werden.

Im Sinne der vorliegenden Erfindung wird unter einem hochviskosen Teig ein Teig mit einer Viskosität zwischen 100 und 1'000 Pascalsekunden (Pas)(beispielsweise ein Snackteig) bei 25°C und unter einem niedrigviskosen Teig ein Teig mit einer Viskosität kleiner als 100 Pascalsekunden (Pas) bei 25°C(beispielsweise ein Brotteig) verstanden.

Im Weiteren können im Sinne einer bevorzugten Weiterbildung unter Zusatzstoffen Enzyme, Verdickungsmittel, Emulgatoren, Fette oder eibasierte Zusätze verstanden werden.

Unter einem Mehl eines Stärke enthaltenden Rohstoffs kann beispielsweise glutenfreies Reismehl, Maismehl, Buchweizenmehl etc. verstanden werden.

Grundsätzlich ist es denkbar, dass das teigbasierte Lebensmittelprodukt im Weiteren einen Gewichtsanteil Hefe umfasst. Vorzugsweise ist jedoch das erfindungsgemäss hergestellte teigbasierte Lebensmittelprodukt hefefrei herstellbar. Durch einen derartigen Verzicht auf eine Zugabe von Hefe und einen damit einhergehenden Fermentationsschritt kann vorteilhaft das erfindungsgemäss hergestellte Lebensmittelprodukt in einem zeitlich verkürzten Herstellverfahren bereitgestellt werden.

Die Idee der Kompensation nachteiliger Qualitätsmerkmale wie reduziertes Backvolumen, zu dichte und feste Struktur, sowie eine ungleichmässige Porenverteilung bei glutenfreien Backwaren und Dauerbackwaren durch eine derartige gezielte Voraufschäumung des Teiges vor dem Backprozess ist neu.

Ein weiterer Aspekt der vorliegenden Erfindung betrifft eine Verwendung der erfindungsgemässen Vorrichtung zur Durchführung des erfindungsgemässen Verfahrens zur Erzielung einer aufgeschäumten, teigbasierten, insbesondere glutenfreien, Lebensmittelprodukts.

## Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:

Fig. 1     eine schematische Darstellung der Verfahrensschritte zur Herstellung des erfindungsgemäss aufgeschäumten, teigbasierten Lebensmittelprodukt;

Fig. 2     ein schematischer Aufbau einer bevorzugten Ausführungsform der erfindungsgemässen Vorrichtung zur kontinuierlichen Herstellung des erfindungsgemäss Lebensmittelprodukts anhand eines Extruders;

Fig. 3     eine schematische Ansicht bevorzugter Mischelemente der Schneckenkonfiguration der in Fig.2 gezeigten bevorzugten Ausführungsform zur Herstellung geschäumter Teige;

Fig. 4     Vergleichende, fotografische Aufnahmen von Querschnitten durch eine konventionell hergestellte, glutenbeinhaltende Frischbackware, eine konventionell hergestellte, glutenfreie Frischbackware und eine gluteinfreie, erfindungsgemäss hergestellte Frischbackware;

Fig. 5     eine μ-computertomographische Aufnahme einer Salzstange als erfindungsgemäss hergestelltes Lebensmittelprodukt;

## Detaillierte Beschreibung der Erfindung

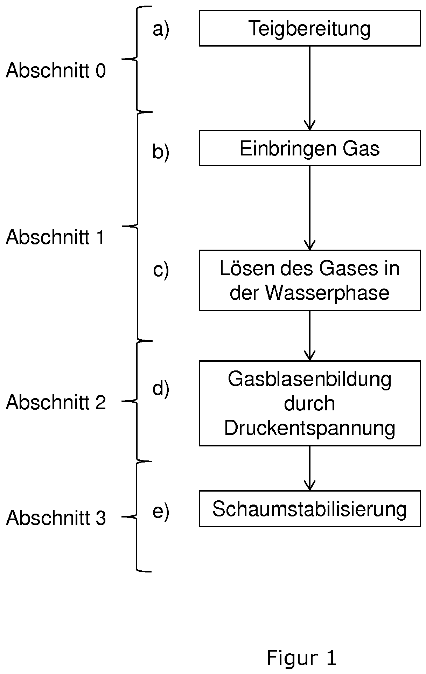

Fig. 1 zeigt eine schematische Darstellung der Verfahrensschritte zur Herstellung des erfindungsgemäss aufgeschäumten, teigbasierten Lebensmittelprodukts gemäss einem besonders bevorzugten, erfindungsgemässen Verfahren. Die erfindungsgemässe Druckgasaufschäumung glutenfreier Teige besteht im Wesentlichen aus den drei Schritten (i) Gaslösung, (ii) Blasennukleierung/ Schaumbildung und (iii) Schaumstabilisierung unter moderaten Druck- und Temperaturbedingungen im subkritischen Bereich.

In **Abschnitt 0** erfolgt in einem Verfahrensschritt a) eine Bereitsstellung einer aufzuschäumenden, teigbasierten Lebensmittelproduktmatrix umfassend einen Gewichtsanteil eines Stärke enthaltenden Rohstoffs sowie einen Gewichtsanteil Wasser, d.h. die eigentliche Teigbereitung.

In **Abschnitt 1** erfolgt in einem Verfahrensschritt b) das Einbringen beispielsweise von Kohlendioxid als Gas in subkritischem Zustand und in einem darauffolgenden Verfahrensschritt c) die Lösung eines Gases unter Druck in einer Teigmatrix. Für die Kinetik des Lösungsvorgangs sind der Druck, die Gasart, die Temperatur, die Teigbeschaffenheit (-viskosität) und die Durchmischung relevant, wie nachfolgend am Beispiel einer Frischbackware sowie einer Dauerbackware erläutert. Entscheidend für die Schaumqualität ist, dass die gewünschte Gasmenge tatsächlich in Lösung geht. Eine reine Dispergierung bzw. Feinverteilung des Gases im Teig ist nicht ausreichend, da dies im Teigschaum zu einer zu ungleichmässigen Gasblasenverteilung führen würde. Dies ist ein wesentlicher Unterschied zu Anwendungen, bei denen Gas/ Luft in Teigmassen mechanisch eingeschlagen und verteilt wird.

Der Lösungsvorgang des Gases in Verfahrensschritt c) findet erfindungsgemäss unter Druck, aber im subkritischen (z.B. bei Kohlenstoffdioxid: p < 73.8 bar/ T < +31 °C) Bereich statt. Der Vorteil bei subkritischen Bedingungen ist, dass keine hohen Drücke notwendig sind mit geringerem Verschleiss der Vorrichtungskomponenten und ein geringerer Aufwand für Sicherheitsmassnahmen getroffen werden muss.

Das Lösen von Gasen in statischen Stoffsystemen ist ein diffusionsgesteuerter Vorgang. Grundsätzlich kann die Diffusion eines Gases in eine Teigmatrix in Abhängigkeit von Temperatur, Druck und Gaskonzentration wie folgt angenähert werden:

$$D = D_0 \exp(-\Delta E_D / R\, T) \quad \text{(Diffusionskoeffizient in Feststoffen)}$$

wobei $D$ der Diffusionskoeffizient, $D_0$ die Diffusionskonstante, und $\Delta E_D$ Aktivierungsenergie für die Diffusion eines Gases in eine Teigmatrix ist.

Da Diffusion ein sehr langsamer Vorgang ist, würde in einem statischen System das Lösen von Gasen sehr viel Zeit in Anspruch nehmen. In der vorliegenden Erfindung hingegen wird ein Verfahren beschrieben, bei dem Gas in kurzer Zeit in einer Teigmatrix gelöst wird, so dass die Anwendung für industrielle Prozesse relevant ist. Neben der Diffusion erfolgt deshalb in Verfahrensschritt c) ein zusätzlicher konvektiver Stofftransport durch eine zusätzliche intensive Durchmischung des Gases mit dem Teigmaterial. Dadurch wird die Dauer des Gaslösens deutlich herabgesenkt.

Da glutenfreie Teige im Vergleich zu glutenbeinhaltenden Teigen oftmals einen erhöhten Wasseranteil und eine niedrigere Viskosität aufweisen, wird besonders vorteilhaft bei glutenfreien Teigen die Löslichkeitsrate des Gases erhöht und die gewünschte Gasmenge kann sich schneller lösen.

Die zu lösende Gasmenge richtet sich nach dem gewünschten Lockerungsgrad der Backware und liegt zwischen 0.05 und 1.5wt% (Gewichtsprozent) ganz besonders bevorzugt bei 0.5 wt%.

In **Abschnitt 2** für Verfahrensschritt d) finden durch gezielten Druckabfall die Nukleation von Gasblasen und die damit verbundene Ausbildung einer Teigschaumstruktur statt. Diesem Abschnitt wird eine besondere Rolle zuteil, da die Struktur nach der vollständigen Entspannung massgeblich für die texturellen und sensorischen Eigenschaften des finalen Produktes verantwortlich ist. Der Schlüssel zu einer feinverteilten Schaumstruktur liegt in einer hohen Nukleationsrate (#/s), d.h. der Ausbildung vieler Gasblasen/ Zellen in einer kurzen Zeit. Um die Nukleation gezielt steuern zu können, ist bevorzugt die erfindungsgemässe Vorrichtung derart ausgestaltet, dass die Gasart, die Gasmenge, die Druckdifferenz, die Druckabfallrate, die Viskosität und die Scherung eingestellt werden kann. In Verfahrensschritt d) erfolgt ein massgeschneiderter Druckabfall durch eine Düse oder ein druckgesteuertes Ventil. Prinzipiell bewirkt ein schlagartiger Druckabfall eine intensive Gasblasennukleation, jedoch muss in Abhängigkeit von der Gasmenge und der Teigviskosität darauf geachtet werden, dass die Teigmatrix dabei nicht zerreisst.

**Abschnitt 3** sieht gemäss Verfahrensschritt e) die Schaumstabilisierung beziehungsweise die Verfestigung der Schaumstruktur durch thermische Koagulation bzw. Verkleisterung der Porenwände infolge von Strukturänderungen der polymeren Eiweiss- und Stärkemoleküle vor, beispielsweise bei einer Temperatur im Bereich von 200 °C. Mit anderen Worten wird durch einen anschliessenden Backvorgang durch thermische Energiezufuhr die vorgeschäumte Struktur verfestigt.

Eine bevorzugte Ausführung der Erfindung sieht in Abschnitt 3 das Abfüllen des erhaltenen Teigschaums in Backformen vor.

Vorzugsweise findet die Verfestigung unmittelbar nach der Schaumherstellung statt, da längere Zwischenzeiten zwischen Aufschäumung und Verfestigung zu einem Zusammenbrechen der Struktur oder zu einer Vergröberung der Schaumstruktur führen können, da es sich bei den Teigschäumen um thermodynamisch instabile Stoffsysteme handelt.

Die Temperatur- / Zeitkombinationen können ähnlich gewählt werden wie bei der traditionellen Herstellung. Handelt es sich um stark niedrigviskose und hoch aufgeschäumte Teige, werden höher Temperaturen bevorzugt. Nach der Verfestigung erfolgt keine weitere Schaumdestabilisierung bzw. Veränderung der Gasblasenstruktur.

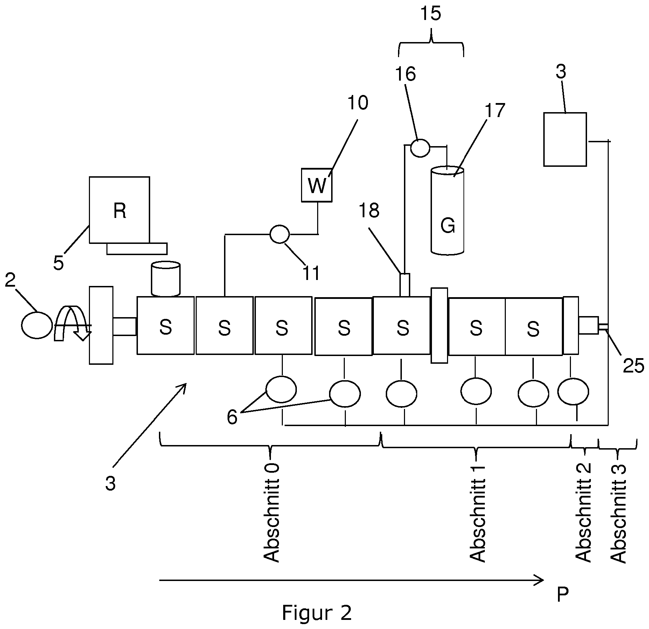

Fig. 2 zeigt eine bevorzugte Ausführungsform der erfindungsgemässen Vorrichtung zur Durchführung des in Fig. 1 erläuterten erfindungsgemässen Verfahrens.

Gemäss der bevorzugten Ausführungsform der Erfindung erfolgt die Gaslösung in **Abschnitt 1,** in **Abschnitt 2** die Entspannung an einer Düse 25 endseitig zu einem Extruder 3 und in **Abschnitt 3** die Schaumstabilisierung in einem Backofen (nicht gezeigt in Fig. 2).

Überkritische Bedingungen können erfindungsgemäss aufgrund einer intensiven Durchmischung, kombiniert mit einer ausreichend langen Verweilzeit in der erfindungsgemässen Vorrichtung und einer gezielten Entspannung durch eine Düse oder ein Ventil vorteilhaft vermieden werden.

In den US-Patenten (Rizvi) werden in Abgrenzung zum erfindungsgemässen Verfahren und der erfindungsgemässen Vorrichtung nur überkritische Gase, namentlich überkritisches CO2 berücksichtigt. Es wird aber nicht bekanntgegeben, in welchem Umfang das Gas in der Teigmatrix gelöst wird. Ebenfalls wird nicht genauer auf die Blasenbildung eingegangen. Hier erfolgt das Lösen von Gas ausschliesslich über die Anwendung von hohem Druck. Unberücksichtigt sind die Verweilzeit des Gases und die Bedingungen des Mischens und der Entspannung. Es werden ausschliesslich Förderelemente eingesetzt.

Konvektion plus Diffusion kann in einem Extruder vorteilhaft effektiv umgesetzt werden, weshalb eine Anreicherung der Teige mit Gas vorzugsweise wie in Fig. 2 gezeigt in einem Extruder 3 erfolgt.

Der in Fig. 2 gezeigte Extruder 3 ist in einzelne Segmente (S) beziehungsweise Behandlungszonen unterteilt. In Abschnitt 0 ist zu Beginn der Prozessstrecke P eine Zufuhreinrichtung 5 zur Zufuhr eines Stärke enthaltenden Rohstoffs R angeordnet. Nachgelagert in Richtung der Prozessstrecke P ist im Weiteren eine Zufuhreinrichtung 10 zur Zufuhr von Wasser W angeordnet.

In den Segmenten S nachgelagert zur Zufuhreinrichtung 10 ist jeweils pro Segment eine Temperiereinrichtung 6 wirkverbunden, wobei die Temperiereinrichtungen 6 über eine Steuereinheit 3 steuerbar sind. Vorzugsweise werden Temperatureinrichtungen im erfindungsgemässen Verfahren auf eine Temperatur im Bereich von 20° bis 30°C eingestellt.

Fig. 2 zeigt in Abschnitt 1 der Prozessstrecke eine Zufuhreinrichtung 15 zur Zufuhr des zu lösenden Gases. Der Massenfluss vom Gas beeinflusst massgeblich die Teigdichte und somit auch das Gebäckvolumen. Durch die Regelung mit einem geeigneten Durchflussventils 16 für Gase kann die Teigdichte gezielt eingestellt werden.

Idealerweise sollte nur so viel Gas dosiert werden, wie sich im Teig auch tatsächlich lösen lässt. Ein Überschuss an Gas würde zu Verstärkung von Blow-By Effekten und zur Bildung unerwünschter grosser Hohlräume in der Teigschaummatrix führen. Daraus würde eine grobe und ungleichmässige Porung im fertigen Produkt resultieren. Die dosierten Gasmengen beziehungsweise der Massenfluss des Gases für Kohlenstoff ($CO_2$) liegen besonders bevorzugt zur Vermeidung von solchen Blow-By Effekten beispielsweise zwischen 0.1 bis 0.4 g/h.

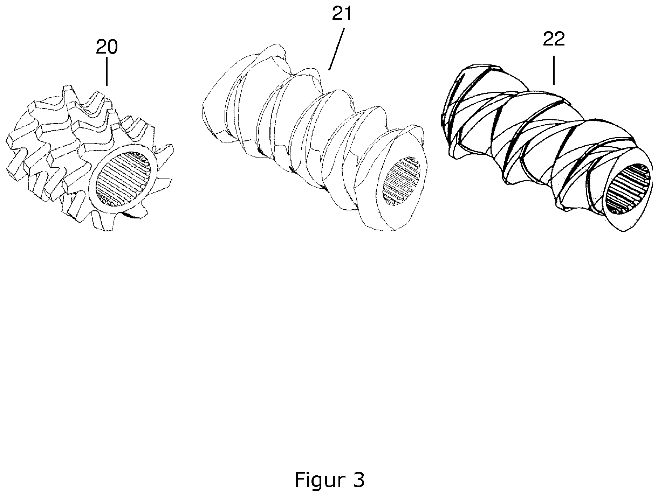

Im Gegensatz zu den bekannten Verfahren und Vorrichtungen wird in der vorliegenden Erfindung eine Kombination aus Mischintensität, Verweilzeit, sowie Temperatur und Druck berücksichtigt. Das Lösen des Gases erfolgt vorzugsweise über Knet- und Mischelemente (siehe Fig.3), die einen geringen Energieeintrag in das Produkt geben, bei gleichzeitig hoher distributiver und dispersiver Mischwirkung, weshalb die erfindungsgemässe Vorrichtung vorzugsweise mindestens ein Schneckenelement mit geeigneten Knet- und Mischelementen umfasst.

Aufgrund der hohen Rückvermischung erzielt anhand eines Schneckenelementkonfiguration mit geeigneten Knet- und Mischelementen ist vorteilhaft eine Verweilzeit von 30s bis 300s bereits ausreichend, um so bei einer Druck-/ Temperaturkombination von 25 bis 65 bar und 20 bis 30 °C eine vorgegebene Gasmenge zu lösen. Im Vergleich zur Extrusion unter überkritischen Bedingungen, ist dieser Ansatz aus sicherheitstechnischer Sicht vorteilhaft. Weiterhin sind die schonenden Temperaturen bei derartigen subkritischen Bedingungen vorteilhaft hinsichtlich potentiell temperaturempfindlicher Teigkompente verglichen beispielsweise zum bekannten Verfahren aus den US-Patenten (Rizvi), welches einer Kochextrusion gleichkommt.

Im Gegensatz zu Aufschäummethoden, wie es bei niedrigviskosen Teigmassen bekanntermassen zum Einsatz kommt, unterscheidet sich die vorliegende Erfindung deutlich dadurch, dass das Gas in Lösung gebracht wird und nicht nur dispergiert oder fein verteilt wird. Nur durch die Gaslösung, kann gewährleistet werden, dass bei gezielter Entspannung die gewünschte Blasenverteilung entsteht.

Bei Ansätzen, in denen ein Teig mit Gas ohne Gaslösung vermischt wird, richtet sich die Blasengrösse nach dem Verhältnis von destabilisierenden Trägheitskräften zu stabilisierenden Oberflächenkräften und kann durch die Weberzahl beschrieben werden. Liegt das Gas hingegen im wässrigen Anteil der Teigmatrix in gelöster Form vor, wird so wird die Blasengrösse massgeblich durch die Druckdifferenz und Entspannungsrate unter Berücksichtigung der strömungsmechanischen Bedingungen. Von grosser Relevanz ist die Nukleation bzw. mit anderen Worten die Gasblasenbildung, d.h. der Schritt bei dem sich mikroskopisch kleine Gasblasen bilden. Ziel ist eine uniforme Bildung der Blasen in grosser Anzahl.

In der vorliegenden Erfindung findet gemäss Fig.2 die Entspannung vorzugsweise durch eine endseitig am Extruder 3 angeordnete Düse 25 statt. Eine solche zylindrische Düse 25 wird vorzugsweise mit einem LID-Verhältnis von 0.2 bis 200 gewählt. Noch bevorzugter werden kleine L/D-Verhältnisse von 2 bis 30 gewählt, um Druckabfallraten von >60 bar/min zu erhalten.

Fig.3 zeigt eine schematische Ansicht bevorzugter Mischelemente 20; 21; 22 der Schneckenelementkonfiguration der in Fig.2 gezeigten ersten bevorzugten Ausführungsform zur Herstellung des erfindungsgemäss hergestellten, teigbasierten, geschäumten Lebensmittelprodukts, wobei die Löslichkeitsrate durch die in Fig. 3 gezeigten Mischelemente 20; 21; 22, welche an einer Exzenterschnecke (nicht gezeigt in Fig.3) anzubringen sind, erhöht wird.

Die in Fig.3 gezeigten Mischelemente 20; 21; 22 sind bevorzugt in Abschnitt 1 der in Fig.2 gezeigten erfindungsgemässen Vorrichtung angebracht, in welchem Verfahrensschritt c) erfolgt. Bei Mischelement 20 handelt es sich um eine sogenannte Igelschnecke (beispielsweise der Firma Extricom) mit einer derartigen Struktur, dass die teigbasierte Lebensmittelproduktmatrix zumindest teilweise zerschnitten wird, wodurch ein verteilender (distributiver) Mischeffekt erzielt wird.

Bei Mischelement 21 handelt es sich um eine sogenannte Barriereschnecke (beispielsweise der Firma Extricom) mit einer derartigen Struktur, dass ein distributives Mischen erzielt wird. Mischelement weist dabei einen Barriereabschnitt auf, welcher eine Dehnströmung der teigbasierten Lebensmittelproduktmatrix ermöglicht.

Bei Mischelement 22 handelt es sich um ein sogenanntes T-Element (beispielsweise der Firma Extricom) mit einer derartigen Struktur, dass eine distributer Mischeffekt sowie eine Umschichtung der teigbasierten Lebensmittelproduktmatrix erzielt wird.

Es wurde vorteilhaft gefunden, dass durch die verbesserte Durchmischung mittels der Mischelemente 20; 21; 22 weniger Druck notwendig ist und überkritische Bedingungen vermieden werden können.

Die resultierende Durchmischung erhöht die Diffusion von Gas in die Teigmatrix, so dass sich ein Ein-Phasen-System ausbildet. Durch die Schneckenelementkonfiguration gemäss Fig.3 wird vorteilhaft in den Abschnitten 0 bis 3 eine behandlungszonenspezifische, mechanische Behandlung der Masse erhalten. Es wurde vorteilhaft gefunden, dass durch eine derartige Schneckenelementkonfiguration der spezifische mechanische Energieeintrag in die aufzuschäumende, teigbasierte Lebensmittelproduktmatrix vergleichsweise gering und schonend bei Werten von rund 100 kJ/kg liegt.

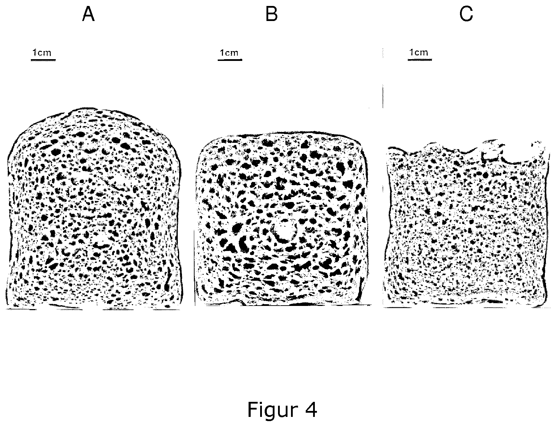

Wie in Fig. 4 ersichtlich weisen traditionell glutenfrei hergestellte, teigbasierte Lebensmittelprodukte eine durch Koaleszenz entstandene, vergleichsweise vergröberte Blasenstruktur beziehungsweise Porung auf, wie in Tabelle 1 zusammengefasst erläutert, wobei A eine traditionell hergestellte, glutenbeinhaltende Frischbackware, B eine traditionell hergestellte, glutenfreie Frischbackware und C eine erfindungsgemäss hergestellte, glutenfreie Frischbackware zeigt.

Die vorliegende Erfindung betrifft die gezielte Strukturierung aufgeschäumter teigbasierter Lebensmittelprodukte und daraus resultierender Backwaren. Um die Qualität sowie die charakteristischen, strukturellen Eigenschaften des erfindungsgemäss hergestellten Lebensmittelprodukts gegenüber konventionell hergestellten Backwaren einschlägig beurteilen zu können, sind beispielsweise das Gebäckvolumen, das Porenbild und die Krumentextur zu untersuchen.

Die erfindungsgemäss hergestellten, teigbasierten Lebensmittelprodukte werden vorzugsweise in Frischbackwaren und Dauerbackwaren unterteilt.

Zur Analyse der Porenmorphologie werden bei Frischbackwaren Scheiben im Querschnitt mit einer Auflösung von 4800 dpi gescannt und mittels Bildverarbeitungssoftware statistisch analysiert (siehe Fig.4).

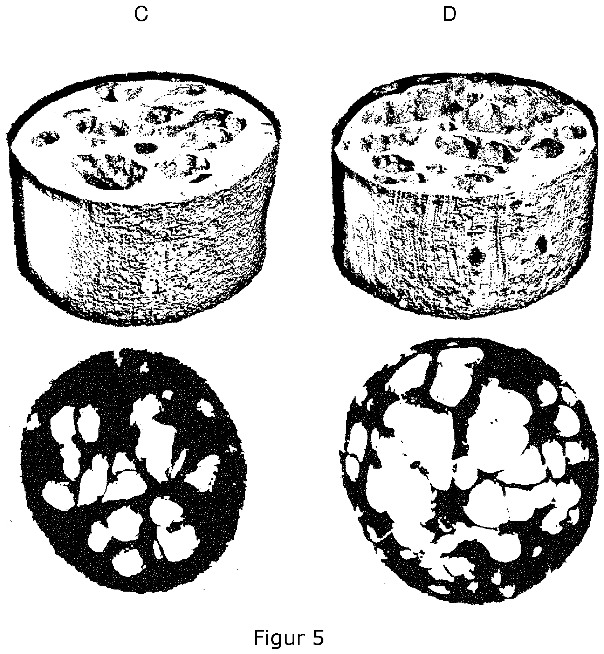

Bei Dauerbackwaren werden die Dichte und die Porenmorphologie mittels Mikrocomputertomographie mit einer Auflösung von $7\mu m$ bestimmt. Neben Porosität werden auch Porengrösse und Anzahl gemessen (siehe Fig.5).

Das Backvolumen und die Gebäckdichte werden mit einem Volumenscanner bestimmt. Das Messprinzip eines Volumenscanners beruht auf einer berührungslosen Abstandsmessung mit einem Lasersensor. Der Umfang des Gebäcks wird längs der Achse in definierten Abständen gemessen. Anhand der Messdaten werden das Volumen und die Dichte berechnet (siehe nachfolgende Tabellen 1 und 2).

Die Krumentextur von Frischbackwaren wird beispielsweise mit einem Texture Analyser bestimmt. Analog zur definierten Norm nach AACC 74-09 wird mit einem Kompressionsstempel die Festigkeit (in g oder N) der Krume untersucht (siehe nachfolgende Tabelle 1).

Bei Dauerbackwaren (z.B. Snacks) wird anstelle der Krumenfestigkeit die Bruchfestigkeit als Texturparameter mit einem Texture Analyser untersucht. Mittels 3-Punkt Biegevorrichtung wird das Bruchverhalten von Snacks in einem Kompressionstest gemessen. Der Test liefert Aussagen über Härte und Biegsamkeit der Probe (siehe nachfolgende Tabelle 2).

Folgende Tabelle 1 zeigt einen Vergleich einer traditionell hergestellten Frischbackware gegenüber dem erfindungsgemässen, anhand des in Fig. 1 gezeigten Verfahrens und der in Fig. 2 gezeigten, erfindungsgemässen Vorrichtung erzielten glutenfreien, erfindungsgemäss hergestellten Lebensmittelprodukts am Beispiel einer Frischbackware (Brot).

Die Herstellung des in Tabelle 1 gezeigten, erfindungsgemäss hergestellten Lebensmittelprodukts am Beispiel von Brot als Frischbackware anhand einer in Fig.2 gezeigten Vorrichtung im Pilotmassstab wird im Folgenden beispielhaft erläutert:

a) In Abschnitt 0 der in Fig.2 gezeigten Vorrichtung zu Beginn der Prozessstrecke P wird eine aufzuschäumende Lebensmittelsmittelproduktmatrix bereitgestellt durch Einstellung der Zufuhreinrichtung 5 auf einen Massenfluss von 4.2 kg/h für das Mehl und durch Einstellung der Zufuhreinrichtung 10 auf einen Massenfluss von 4.08 kg/h für das Wasser;

b) Im Weiteren wird in Abschnitt 1 der in Fig.2 gezeigten Vorrichtung das Kohlenstoffdioxid ($CO_2$) als zu lösendes Gas G über eine Gaseinlassstutzen 18 mit einem Längen / Durchmesserverhältnis L/D von 32 in die aufzuschäumende Lebensmittelproduktmatrix eingebracht, wobei anhand des Durchflussventils 16 ein Massenfluss des Gases G im Bereich von 0.1 kg/h eingestellt wird, was einer vorteilhaften Einstellung zur Erzielung einer gewünschten Teigdichte entspricht. Dabei liegt an der Gaseinlassstutzen 18 messbare Druck des zu lösenden Gases im Bereich von 30 bis 35 bar;

c) Daraufhin löst sich das eingebrachte Gas im wässrigen Anteil der aufzuschäumenden Lebensmittelproduktmatrix während einer Verweilzeit im Bereich von 120s bei einer anhand der Temperiereinrichtungen 6 eingestellten Temperatur von 30°C und bei einem Druck von 30 bis 35 bar;

d) Gasblasenbildung durch Druckentspannung an der Düse 25;

e) In einem unmittelbar anschliessenden Verfahrensschritt erfolgt mittels Backen des erhaltenen, aufgeschäumte, teigbasierte Lebenmittelprodukts bei 200°C während 30 Minuten eine Schaumstabilisierung.

Tabelle 1: Strukturparameter geschäumter Frischbackwaren im Vergleich

| Strukturparameter | | Einheit | Traditionell Weizen (A) | Traditionell Gluten-frei (B) | Erfindungsgemäss Glutenfrei (C) |
|---|---|---|---|---|---|
| Volumen | Volumen $V$ | $mm^3$ | | | |
| | Dichte $\rho$ | g/ml | $312 \pm 15$ | $365 \pm 4$ | $310 \pm 3$ |
| | Overrun $OR$ | % | 203 | 135 | 177 |
| Textur | Bruchkraft $F$ | g | 900 | 950 | 300 |
| Porenstru ktur | Mean x | $\mu m$ | 1116 | 1685 | 996 |
| | $X_{10,3}$ | $\mu m$ | 330 | 545 | 330 |
| | $X_{50,3}$ | $\mu m$ | 870 | 1340 | 750 |
| | $X_{90,5}$ | $\mu m$ | 2220 | 3330 | 2060 |
| | Span $Sp$ | - | 217 | 2.08 | 2.3 |
| | Zelldichte #/ $mm^3$ | $mm^{-3}$ | | | |
| | Porosität | - | 0.67 | 0.57 | 0.64 |

Die Herstellung des in Tabelle 2 gezeigten, erfindungsgemäss hergestellten Lebensmittelprodukts am Beispiel von Salzstangen (Snackprodukt) als Dauerbackware im Pilotmassstab wird im Folgenden beispielhaft erläutert:

a) In Abschnitt 0 der in Fig.2 gezeigten Vorrichtung zu Beginn der Prozessstrecke P wird eine aufzuschäumende Lebensmittelsmittelproduktmatrix bereitgestellt durch Einstellung der Zufuhreinrichtung 5 auf einen Massenfluss von 4.75 kg/h für das Mehl und durch Einstellung der Zufuhreinrichtung 10 auf einen Massenfluss von 3.25 kg/h für das Wasser;

b) Im Weiteren wird in Abschnitt 1 der in Fig.2 gezeigten Vorrichtung das Kohlenstoffdioxid ($CO_2$) als zu lösendes Gas G über eine Gaseinlassstutzen 18 mit einem Längen / Durchmesserverhältnis L/D von 32 in die aufzuschäumende Lebensmittelproduktmatrix eingebracht, wobei anhand des Durchflussventils 16 ein Massenfluss des Gases G im Bereich von 0.1 kg/h eingestellt wird, was einer vorteilhaften Einstellung zur Erzielung einer gewünschten Teigdichte entspricht. Dabei liegt an der Gaseinlassstutzen 18 messbare Druck des zu lösenden Gases im Bereich von 27 bis 32 bar;

c) Daraufhin löst sich das eingebrachte Gas im wässrigen Anteil der aufzuschäumenden Lebensmittelproduktmatrix während einer Verweilzeit im Bereich von 120s bei einer anhand der Temperiereinrichtungen 6 eingestellten Temperatur von 20°C und bei einem Druck von 27 bis 32 bar;

d) Gasblasenbildung durch Druckentspannung an der Düse 25 mit einem L/D-Verhältnis von 22;

e) In einem unmittelbar anschliessenden Verfahrensschritt erfolgt mittels Backen des erhaltenen, aufgeschäumte, teigbasierte Lebenmittelprodukts bei 200°C während 7 Minuten eine Schaumstabilisierung.

Tabelle 2: Strukturparameter geschäumter Dauerbackwaren im Vergleich.

| Strukturparameter | | Einheit | Keine Aufschäumung (C) | Aufschäumung (D) |
|---|---|---|---|---|
| Volumen | Volumen $V$ | mm$^3$ | | |
| | Dichte $\rho$ | g/ml | 825 ± 10 | 717 ± 3 |
| | Overrun $OR$ | % | | 15 |
| Textur | Bruchkraft $F$ | N | 36 ± 15 | 17 ± 5 |
| Porenstruktu r | Mean x | μm | 205 | 189 |
| | $X_{10,3}$ | μm | 30 | 52 |
| | $X_{50,3}$ | μm | 211 | 182 |
| | $X_{90,5}$ | μm | 344 | 318 |
| | Span $Sp$ | - | 1.49 | 1.46 |
| | Zelldichte $\#/mm^3$ | mm$^{-3}$ | 411 | 592 |
| | Porosität | - | 0.34 | 0.53 |

Fig. 5 zeigt eine μ-computertomographische Aufnahme einer Dauerbackware des erfindungsgemäss hergestellten, teigbasierten Lebensmittelprodukts.

Im Weiteren wird beispielhaft ein mögliches Herstellungsverfahren anhand der Fig. 1 gezeigten Verfahrensschritte a) bis e) anhand eines druckdicht verschliessbaren Druckbehälters, insbesondere eines Rahmbläsers, erläutert: In Verfahrensschritt a) wird eine aufzuschäumende, teigbasierte Lebensmittelproduktmatrix bereitgestellt umfassend einen Gewichtsanteil eines Stärke enthaltenden Rohstoffs, insbesondere ein glutenfreies Getreidemehl sowie 1 bis 1.8 Gewichtsanteile Wasser und in den druckdicht verschliessbaren Druckbehälter gegeben.

In einem darauffolgenden Verfahrensschritt b) wird mittels einer Gaskartusche im Sinne einer Zufuhreinrichtung zur Zufuhr eines Gases in subkritischem Zustand, insbesondere Kohlendioxid ($CO_2$) und / oder Lachgas ($N_2O$), in die aufzuschäumende Lebensmittelproduktmatrix eingebracht.

Im folgenden Verfahrensschritt c) wird das eingebrachte Gas im wässrigen Anteil der teigbasierten Lebensmittelproduktmatrix unter Druck gelöst, wobei mittels Schütteln des Druckbehälters eine Durchmischung des Wassers und des Stärke enthaltenden Rohstoffs und gleichzeitig ein Lösen des Gases im wässrigen Anteil der teigbasierten Lebensmittelproduktmatrix erzielt wird. Das Schütteln des Druckbehälters kann manuell erfolgen oder beispielsweise mittels eines Vortexmischers oder dergleichen.

Im Verfahrensschritt d) wird mittels Betätigung einer Entspannungsdüse, welche in einem für den Austritt der teigbasierten Lebensmittelproduktmatrix bestimmten Austrittsbereich des druckdicht verschliessbaren Behälters angeordnet ist, ein Austreten der teigbasierten Lebensmittelproduktmatrix erzielt, wobei durch die dabei auftretende Druckentspannung ein Gasblasenbildung induziert und eine aufgeschäumte Lebensmittelproduktmatrix erzeugt wird. Beispielsweise kann in Verfahrensschritt d) die erzeugte, aufgeschäumte Lebensmittelproduktmatrix in eine geeignete Backform gegossen werden.

In einem weiteren Verfahrensschritt e) wird mittels eines Backvorgangs eine Schaumstabilisierung erzielt und dadurch das teigbasierte, aufgeschäumte Lebensmittelprodukt erhalten.

Das erhaltene, aufgeschäumte und glutenfreie Lebensmittelprodukt zeigt mittlere Porendurchmesser von 500 μm mit einem gleichmässigen Porenbild. Im Weiteren wurde eine Brotdichte von 360g/l erzielt, welche überraschend nahe einem konventionellen, hefegelockerten, glutenbeinhaltenden Weizenbrot (200-350g/l) liegt.

Mit anderen Worten wird anhand dieses erfindungsgemässen Verfahrens unabhängig vom Gashaltevermögen eine den hohen Anforderungen an die Struktur und Porenbeschaffenheit genügendes aufgeschäumtes, teigbasiertes Lebensmittelprodukt bzw. Backware erhalten.

**Bezugszeichenliste**

1 Steuereinheit
2 Antriebseinheit (Extruder)
3 Extruder
5 Zufuhreinrichtung zur Zufuhr eines Stärke enthaltenden Rohstoffs
6 Temperiereinrichtung

10 Zufuhreinrichtung zur Zufuhr von Flüssigkeit (Wasser)
11 Exzenterschneckenpumpe
15 Zufuhreinrichtung (Gas)
16 Durchflussventil
17 Gasdruckbehälter
18 Gaseinlassstutzen
20 Mischelement
21 Mischelement
22 Mischelement
25 Düse (endseitig zum Extruder)
G Gas
P Prozessrichtung (Extruder)
R Rohstoff (Stärke enthaltender)
S Segmente
W Wasser

## Patentansprüche

1. Verfahren zur Herstellung eines aufgeschäumten, teigbasierten, glutenfreien Lebensmittelprodukts, umfassend die Verfahrensschritte:

a) Bereitstellung einer aufzuschäumenden Lebensmittelproduktmatrix umfassend einen Gewichtsanteil eines Stärke enthaltenden, glutenfreien Rohstoffs (R) sowie einen Gewichtsanteil Wasser (W),
b) Einbringen eines zu lösenden Gases oder eines in einer Dispersion gelösten Gases in Form von Kohlenstoffdioxid ($CO_2$) oder Lachgas ($N_2O$) in die aufzuschäumende Lebensmittelproduktmatrix zwischen 0.05 und 1.5wt%,
c) Lösen des zu lösenden Gases unter Druck im wässrigen Anteil der aufzuschäumenden Lebensmittelproduktmatrix,
bzw.
wobei das Einbringen des in der Dispersion gelösten Gases unter Druck in den wässrigen Anteil der aufzuschäumenden Lebensmittelproduktmatrix erfolgt,
d) Gasblasenbildung durch Druckentspannung bei einer Druckabfallrate von >60bar/min und Volumenvergrösserung mit resultierender Dichtereduzierung des Teigs durch Blasenwachstum zur Bildung einer aufgeschäumten Lebensmittelproduktmatrix des herzustellenden Lebensmittelprodukts,
e) Schaumstabilisierung der aufgeschäumten Lebensmittelproduktmatrix
**dadurch gekennzeichnet, dass**

in Verfahrensschritt b) und / oder Verfahrensschritt c) Gas in einem subkritischen Zustand unter dem kritischen Punkt bei einem Druck von 10bar $\leq$ p < kritischer Druck des Gases vorliegt, wobei der kritische Punkt die kritische Temperatur, den kritischen Druck sowie die kritische Dichte einschliesst, und dass in Verfahrensschritt c) ein zusätzlicher konvektiver Stofftransport durch eine zusätzliche intensive Durchmischung des Gases mit dem Teigmaterial erfolgt.

2. Verfahren nach Anspruch 1,
**dadurch gekennzeichnet, dass**
in Verfahrensschritt e) die Schaumstabilisierung der aufgeschäumten Lebensmittelmatrix durch hitzeinduzierte Verfestigung erzielt wird.

3. Verfahren nach Anspruch 1 oder 2,
**dadurch gekennzeichnet, dass**
in Verfahrensschritt b) und / oder c) als Gas Kohlenstoffdioxid ($CO_2$) oder Lachgas ($N_2O$) jeweils in ihrem subkritischen Zustand eingebracht wird.

4. Verfahren nach Anspruch 3,
**dadurch gekennzeichnet, dass**
in Verfahrensschritt b) und c) bei Kohlenstoffdioxid ($CO_2$) als subkritisches Gas Drücke von 25 $\leq$ p $\leq$ 65bar und eine Temperatur von < 31 °C vorliegen.

**5.** Vorrichtung zur Durchführung des Verfahrens nach einem der Ansprüche 1 bis 4 zur Herstellung eines Lebensmittelprodukts, umfassend zumindest eine zur Teigbereitung geeignete Einrichtung zur Herstellung einer aufzuschäumenden, teigbasierten Lebensmittelproduktmatrix sowie eine Zufuhreinrichtung (15) zur Zufuhr eines Gases in die aufzuschäumende, teigbasierte Lebensmittelproduktmatrix,
**dadurch gekennzeichnet, dass**

die Vorrichtung derart ausgestaltet ist, dass Gas in einem subkritischen Zustand unter dem kritischen Punkt bei einem Druck von 10bar $\leq$ p < kritischer Druck des Gases in den wässrigen Anteil der aufzuschäumenden Lebensmittelmatrix mittels der Zufuhreinrichtung (15) einbringbar ist und ein Lösen des eingebrachten Gases in einem subkritischen Zustand unter dem kritischen Punkt bei einem Druck von 10bar $\leq$ p < kritischer Druck des Gases in der Vorrichtung einstellbar ist zum Erhalt eines aufgeschäumten, teigbasierten Lebensmittelprodukts,
wobei die Vorrichtung einen Extruder als Einrichtung zur Teigbereitung umfasst zur Durchführung der Verfahrensschritte a) bis e) zur Erzielung eines kontinuierlichen Herstellungsprozesses,
wobei die Vorrichtung eine Düse oder ein Ventil umfasst, welche derart ausgestaltet ist, um eine Druckabfallrate von >60bar/min zu gewährleisten,
wobei die Vorrichtung mindestens ein Schneckenelement mit geeigneten Knet- und Mischelementen umfasst, wobei die Mischelemente derart ausgestaltet sind, dass ein distributives Mischen beim Lösen des Gases in der Lebensmittelmatrix erzielt wird, und
wobei die Vorrichtung einen druckdicht verschliessbaren Behälter als Einrichtung zur Teigbereitung umfasst, wobei in einem für den Austritt der teigbasierten Lebensmittelproduktmatrix bestimmten Austrittsbereich des druckdicht verschliessbaren Behälters eine Entspannungsdüse angeordnet ist zur Erzielung einer Druckentspannung und damit zur Bildung einer aufgeschäumten, teigbasierten Lebensmittelproduktmatrix.

**6.** Vorrichtung nach Anspruch 5,
**dadurch gekennzeichnet, dass**

die Vorrichtung eine Zufuhreinrichtung (5) zur Zufuhr eines Stärke enthaltenden Rohstoffs in den Extruder (3); eine der Zufuhreinrichtung (5) in Prozessrichtung (P) des Extruders (3) nachgeschaltete Zufuhreinrichtung (10) zur Zufuhr von Flüssigkeit, insbesondere Wasser; sowie der Zufuhreinrichtung (10) in Prozessrichtung nachgeschaltet die Zufuhreinrichtung (15) umfasst.

**7.** Vorrichtung nach einem der Ansprüche 5 oder 6,
**dadurch gekennzeichnet, dass**
der Extruder ein gleichsinnig oder gegensinnig ausgestalteter Doppelschneckenextruder ist.

**8.** Verwendung einer Vorrichtung nach einem der Patentansprüche 5 bis 7 zur Durchführung des Verfahrens nach einem der Patentansprüche 1 bis 4 zur Erzielung eines aufgeschäumten, teigbasierten, glutenfreien Lebensmittelprodukts.

**Claims**

**1.** A method for the production of a foamed, dough-based, gluten-free food product, comprising the steps of:

a) Providing a food product matrix to be foamed comprising a proportion by weight of a starch-containing, gluten-free raw material (R) as well as a proportion by weight of water (W),
b) Introducing a gas to be dissolved or a gas dissolved in a dispersion in the form of carbon dioxide ($CO_2$) or nitrous oxide ($N_2O$) into the food product matrix to be foamed between 0.05 and 1.5 % by weight,
c) Dissolving the gas to be dissolved under pressure in the aqueous portion of the food product matrix, respectively
wherein the introducing of the gas dissolved in the dispersion into the aqueous portion of the food product matrix to be foamed takes place under pressure,
d) Gas bubble formation due to pressure drop at a pressure drop rate of >60 bar/min and volume increase with resulting density reduction of the dough due to bubble growth to form a foamed food product matrix of the food product to be produced,
e) Foam stabilization of the foamed food product matrix
**characterized in that**

in step b) and/or step c) gas is present in a subcritical state below the critical point at a pressure of 10bar $\le p <$ critical point, wherein the critical point includes the critical temperature, the critical pressure as well as the critical density, and that

in step c) an additional convective material transport occurs by an additional intensive mixing of the gases with the dough material.

2. The method according to claim 1, **characterized in that** in step e) the foam stabilization of the foamed food matrix is attained by heat-induced solidification.

3. The method according to claims 1 or 2, **characterized in that** in step b) and/or step c) carbon dioxide ($CO_2$) or nitrous oxide ($N_2O$) are introduced as gas in each case in their subcritical state.

4. The method according to claim 3, **characterized in that** in step b) and step c) pressures of $25 \le p \le 65$ bar and a temperature of $< 31$ °C are present in the case of carbon dioxide ($CO_2$) as subcritical gas.

5. An apparatus for carrying out the method according to one of claims 1 to 4 for the production of a food product, comprising at least one device suitable to prepare dough for the production of a dough-based food product matrix to be foamed as well as a supply device (15) for supplying a gas into the dough-based food product matrix to be foamed,

**characterized in that**

the apparatus is embodied in such a way that gas can be introduced into the aqueous portion of the food matrix to be foamed in a subcritical state below the critical point at a pressure of 10 bar $\le p <$ critical pressure of the gas by means of the supply device (15) and a dissolving of the introduced gas in a subcritical state below the critical point can be adjusted in the apparatus at a pressure of 10 bar $\le p <$ critical point of the gas for attaining a foamed, dough-based food product, wherein the apparatus comprises an extruder as device for the preparation of dough to carry out the steps a) to e) for attaining a continuous production process, wherein the apparatus comprises a nozzle or a valve, which are embodied in such a way to ensure a pressure drop rate of $> 60$ bar/min, wherein the apparatus comprises at least one screw element with suitable kneading and mixing elements, wherein the kneading elements are embodied in such a way that a distributive mixing is attained when dissolving the gases in the food matrix, and wherein the apparatus comprises a pressure-tight sealable container as device for the preparation of dough, wherein a relaxation nozzle is arranged in an outlet area of the pressure-tight sealable container intended for the outlet of the dough-based food product matrix, to attain a pressure release and thus to form a foamed dough-based food product matrix.

6. The method according to claim 5, **characterized in that** the apparatus comprises a supply device (5) for supplying starch-containing raw material into the extruder (3); a supply device (10) connected downstream of the supply device (5) in the process direction (P) for supplying liquid, in particular water; as well as the supply device (15) connected downstream of the supply device (10) in the process direction.

7. The method according to any of claims 5 or 6, **characterized in that** the extruder is a twin-screw extruder designed in the same direction or in the opposite direction.

8. Use of an apparatus according to any of claims 5 to 7 for carrying out the method according to any of claims 1 to 4 to obtain a foamed, dough-based, gluten-free food product.

**Revendications**

1. Procédé de fabrication d'un produit alimentaire émulsionné, sans gluten, à base de pâte, comprenant les étapes de procédé :

a) mise à disposition d'une matrice de produit alimentaire à émulsionner comprenant une proportion en poids d'une matière première sans gluten (R) contenant de l'amidon ainsi qu'une proportion en poids d'eau (W),

b) introduction d'un gaz à dissoudre ou d'un gaz dissous dans une dispersion sous forme de dioxyde de carbone ($CO_2$) ou de gaz nitreux ($N_2O$) dans la matrice de produit alimentaire à émulsionner entre 0,05 et 1,5 % en poids,

c) dissolution du gaz à dissoudre sous pression dans la proportion aqueuse de la matrice de produit alimentaire à émulsionner,

respectivement

dans lequel l'introduction du gaz dissous dans la dispersion a lieu sous pression dans la proportion aqueuse de la matrice de produit alimentaire à émulsionner,

d) formation de bulles de gaz par relâchement de pression à un taux de chute de pression de > 60 bar/min et augmentation de volume avec réduction de densité résultante de la pâte par croissance de bulles pour la formation d'une matrice de produit alimentaire émulsionnée du produit alimentaire à fabriquer,

e) stabilisation de mousse de la matrice de produit alimentaire émulsionnée **caractérisé en ce que**

à l'étape de procédé b) et/ou à l'étape de procédé c), du gaz est présent dans un état sous-critique en dessous du point critique à une pression de 10 bar $\leq$ p < pression critique du gaz, dans laquelle le point critique comprend la température critique, la pression critique ainsi que la densité critique, et **en ce que** à l'étape de procédé c), un transport de substance supplémentaire par convection a lieu par un mélange intensif supplémentaire du gaz avec la pâte.

**2.** Procédé selon la revendication 1,
**caractérisé en ce que**
à l'étape de procédé e), la stabilisation de mousse de la matrice de produit alimentaire émulsionnée est obtenue par solidification induite par chaleur.

**3.** Procédé selon la revendication 1 ou 2,
**caractérisé en ce que**
à l'étape de procédé b) et/ou à l'étape de procédé c), du dioxyde de carbone ($CO_2$) ou du gaz nitreux ($N_2O$) est respectivement introduit sous forme de gaz dans son état sous-critique.

**4.** Procédé selon la revendication 3,
**caractérisé en ce que**
à l'étape de procédé b) et à l'étape de procédé c), des pressions de 25 $\leq$ p $\leq$ 65 bar et une température de < 31 °C sont présentes pour du dioxyde de carbone ($CO_2$) sous forme de gaz sous-critique.

**5.** Dispositif pour la mise en oeuvre du procédé selon l'une quelconque des revendications 1 à 4 pour la fabrication d'un produit alimentaire, comprenant au moins un dispositif approprié pour la préparation de pâte pour la fabrication d'une matrice de produit alimentaire à base de pâte à émulsionner ainsi qu'un dispositif d'alimentation (15) pour l'alimentation d'un gaz dans la matrice de produit alimentaire à base de pâte à émulsionner,
**caractérisé en ce que**

le dispositif est configuré de telle sorte que du gaz dans un état sous-critique en dessous du point critique à une pression de 10 bar $\leq$ p < pression critique du gaz est introduisable dans la proportion aqueuse de la matrice de produit alimentaire à émulsionner au moyen du dispositif d'alimentation (15) et une dissolution du gaz introduit dans un état sous-critique en dessous du point critique à une pression de 10 bar $\leq$ p < pression critique du gaz est régable dans le dispositif pour l'obtention d'un produit alimentaire émulsionné à base de pâte,

dans lequel le dispositif comprend une extrudeuse en tant que dispositif pour la préparation de pâte pour la mise en oeuvre des étapes de procédé a) à e) pour l'obtention d'un processus de fabrication continu,

dans lequel le dispositif comprend une buse ou une soupape qui est configurée de telle sorte à garantir un taux de chute de pression de > 60 bar/min,

dans lequel le dispositif comprend au moins un élément de vis avec des éléments de pétrissage et de mélange appropriés, dans lequel les éléments de mélange sont configurés de telle sorte qu'un mélange par répartition est obtenu lors de la dissolution du gaz dans la matrice de produit alimentaire, et

dans lequel le dispositif comprend un récipient fermable de manière étanche à la pression en tant que dispositif pour la préparation de pâte, dans lequel une buse de détente est disposée dans une zone de sortie du récipient fermable de manière étanche à la pression, destinée à la sortie de la matrice de produit alimentaire à base de pâte, pour l'obtention d'un relâchement de pression et donc pour la formation d'une matrice de produit alimentaire émulsionnée à base de pâte.

**6.** Dispositif selon la revendication 5,
**caractérisé en ce que**

le dispositif comprend un dispositif d'alimentation (5) pour l'alimentation d'une matière première contenant de l'amidon dans l'extrudeuse (3) ;

un dispositif d'alimentation (10) monté en aval du dispositif d'alimentation (5) dans la direction de procédé (P) de l'extrudeuse (3) pour l'alimentation de liquide, en particulier d'eau ; ainsi qu'un dispositif d'alimentation (15) monté en aval du dispositif d'alimentation (10) dans la direction de procédé.

7.  Dispositif selon l'une des revendications 5 ou 6,
    **caractérisé en ce que**
    l'extrudeuse est une extrudeuse à double vis configurée dans le même sens ou dans des sens opposés.

8.  Utilisation d'un dispositif selon l'une des revendications 5 à 7 pour la mise en oeuvre du procédé selon l'une des revendications 1 à 4 pour obtenir un produit alimentaire émulsionné, sans gluten, à base de pâte.

Abschnitt 0

Abschnitt 1

Abschnitt 2

Abschnitt 3

a) | Teigbereitung

b) | Einbringen Gas

c) | Lösen des Gases in der Wasserphase

d) | Gasblasenbildung durch Druckentspannung

e) | Schaumstabilisierung

Figur 1

Figur 2

20

21

22

Figur 3

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 48534 A
- US 5417992 A
- US 5120559 A
- US 5549922 A
- US 6207214 B1

**In der Beschreibung aufgeführte Nicht-Patentliteratur**

- **A.H. MASSEY et al.** Air Inclusion Into a Model Cake Batter Using a Pressure Whisk: Development of Gas Hold-up and Bubble Size Distribution. *Journal of Food Science,* 28. Oktober 2001, vol. 66 (8), 1152-1157
- **RENATA ROZYLO et al.** Physical properties of gluten-free bread caused by water addition. *International Agrophysics,* 01. Juli 2015, vol. 29 (3), 353-364